# EUROPEAN PATENT SPECIFICATION

(11) **EP 0 867 556 B1**
(45) Date of publication and mention of the grant of the patent: **08.10.2003**
(21) Application number: 98105048.7
(22) Date of filing: 19.03.1998
(51) Int. Cl.: D06M 15/568

(54) **Keratin fibre treating agent and method**
Behandlungsmittel für Keratinfasern und Verfahren
Agent de traitement de fibres kératiniques et procédé

(30) Priority: 26.03.1997 JP 7361797
(43) Date of publication of application: 30.09.1998
(73) Proprietor: DAI-ICHI KOGYO SEIYAKU CO., LTD., Shimogyo-ku Kyoto (JP)
(72) Inventor: Saiuchi, Naofumi, Yasu-gun, Shiga (JP); Furukawa, Masako, Kyoto (JP); Kobayashi, Katsuyoshi, Kyoto (JP); Sato, Kazuo, Shiga (JP)
(74) Representative: Strehl Schübel-Hopf & Partner

(56) References cited:
- EP-A- 0 339 435
- FR-A- 2 172 416
- FR-A- 2 325 671
- US-A- 3 847 543
- G. BRUCE GUISE AND MICHAEL A. RUSHFORTH: "Structural Studies of Shrink-resist Polymers for Wool: The Influence of Molecular Weight and Functionality in Propylene Oxide Polyisocyanates" JOURNAL OF THE SOCIETY OF DYERS AND COLOURISTS., vol. 91, no. 10, October 1975, BRADFORD GB, pages 325-329, XP002069453

## Description

### BACKGROUND OF THE INVENTION

### TECHNICAL FIELD

The present invention relates to a finishing agent for keratin textile fibers (fibers and articles composed exclusively or partly of keratin fiber) and a method for finishing keratin fibers. More particularly, the invention relates to a keratin fiber finishing composition comprising a urethane prepolymer hydrogen sulfite salt with which keratin textile fibers and articles (hereinafter sometimes referred to briefly as fiber) can be shrinkproofed without compromise in hand and to a method for treating fiber with said finishing agent.

### PRIOR ART

As a shrinkproofing agent (a chemical which renders a textile fiber resistant to shrinking on laundering) for keratin fiber, there is known the so-called BAP (Bisulfite Adduct of Polyisocyanate) developed by Commonwealth Scientific and Industrial Research Organization (CSIRO) (cf. Japanese Kokai Tokkyo Koho S52-37900, Japanese Kokai Tokkyo Koho S51-82100, Japanese Kokai Tokkyo Koho S53-23879, Japanese Patent Publication S58-2972, Japanese Patent Publication S60-10054). This technology comprises treating a substrate textile fiber or article with an aqueous solution of a urethane prepolymer hydrogen sulfite salt and then subjecting the fiber to the conventional dry-cure treatment. This technology enabled even downtown dyehouses to undertake the shrinkproofing of textile fibers.

It is true that this prior art BAP technology provides a sufficient shrinkproofing effect but the resilience of the finished fiber is increased to detract from the inherent unique hand of keratin fiber, resulting in a hard hand. Moreover, the technology can hardly be applied to delicate soft textile articles, thus being self-limited in the field of application.

### OBJECT OF THE INVENTION

Developed to overcome the above disadvantages of the prior art, the present invention has for its object to provide a keratin textile fiber finishing agent with which keratin fiber can be shrinkproofed without compromise in hand and a method for finishing keratin fiber.

### SUMMARY OF THE INVENTION

The keratin textile fiber finishing agent comprising a urethane prepolymer according to the present invention is a compound satisfying the following conditions.
(a) It is a reaction product of a polyol derived from a trifunctional (trihydric) alcohol with an isocyanate compound.
(b) The average number of functional groups of the polyol mentioned under (a) as determined by quantitative ¹³C-NMR spectrometry is 2.2-3.0.
(c) The average molecular weight (number average molecular weight) of the polyol mentioned under (a) is 8,000-20,000.
(d) The polyoxypropylene (PO) content of the polyol mentioned under (a) is 50-100% (that is to say the proportion of propylene oxide in the alkylene oxide added to the starting polyether polyol is 50-100%).
(e) The terminal isocyanate groups are blocked with a hydrogen sulfite.

The keratin textile fiber finishing method of the present invention comprises depositing said finishing agent on keratin fiber and heat-treating the same.

### DETAILED DESCRIPTION OF THE INVENTION

The term "keratin fiber" as used in this specification and appended claims means any and all of those textile fibers and articles which are composed, either exclusively or in part, of such fibers as wool, angora, cashmere, alpaca, and mohair.

The starting polyol for use in the production of said urethane prepolymer is a polyol synthesized from a trifunctional alcohol. Use of a di- or monofunctional alcohol does not provide for the desired shrinkproofing effect, while use of a tetra- or polyfunctional alcohol leads to a hard hand.

There is no particular limitation on the trifunctional alcohol that can be used in the present invention. Thus, the trifunctional alcohol includes such ordinary triols as glycerol, hexanetriol, trimethylolethane, and trimethylolpropane, among others. Aside from those triols, alkanolamines such as triethanolamine, triisopropanolamine, tributanolamine, etc. can also be employed.

The polyether polyol mentioned above is produced by subjecting such a trifunctional alcohol and an alkylene oxide to addition polymerization.

The alkylene oxide mentioned just above includes but is not limited to ethylene oxide, propylene oxide, and butylene oxide. However, from the standpoints of finished hand, shrinkproofing effect, and availability, propylene oxide is preferred.

The average number of functional groups in the starting polyether polyol as determined by ¹³C-NMR spectrometry (J. Appl. Polym. Sci., 52, 1015-1022, 1994) should be 2.2-3.0. If the functionality is less than 2.2, a sufficient shrinkproofing effect may not be obtained. If the functionality exceeds 3.0, the hand of the treated fiber will tend to be stiffened. The preferred average number of functional groups is 2.4-3.0 (Claim 2).

The average molecular weight of the starting polyether polyol is 8,000-20,000. If it is less than 8,000, a hard hand will result. With an average molecular weight over 20,000, the shrinkproofing effect will not be fully expressed. The preferred average molecular weight of the starting polyether polyol is 10,000-20,000 (Claim 3).

The polyoxypropylene content of the starting polyether polyol is 50-100%. If the proportion of polyoxyethylene is smaller than 50%, the three requirements of shrinkproofing effect, soft hand, and provision of an aqueous system (water-based finish) may not be simultaneously satisfied. The preferred range is 70-100%.

The objective urethane prepolymer is produced by reacting the thus-obtained polyether polyol with an isocyanate compound.

There is no particular limitation on the isocyanate compound that can be used. The isocyante compound which can be used includes a broad range of organic polyisocyanates such as tolylene diisocyanate (TDI), diphenylmethane diisocyanate (p-MDI), polyphenylpolymethyl polyisocyanate and other liquid MDIs, polymeric MDI, hexamethylene diisocyanate (HMDI), xylylene diisocyanate (XDI), tetramethylxylylene diisocyanate (TMXDI), and isophorone diisocyanate (IPDI), among others. When the non-yellowing property is an import quality parameter, such aliphatic isocyanate compounds as HMDI, such alicyclic isocyanate compounds as IPDI, and such aromatic isocyanate compounds as XDI and TMXDI are preferred.

Then, the free isocyanate groups of the resulting urethane prepolymer are blocked with a hydrogen sulfite. This blocking reaction can be carried out by the known technology using an aqueous solution of a hydrogen sulfite of appropriate concentration.

The hydrogen sulfite that can be used for blocking terminal isocyanate groups includes but is not limited to sodium hydrogen sulfite, potassium hydrogen sulfite, and ammonium hydrogen sulfite. Use of any other blocking agent than a hydrogen sulfite, such as organic oximes, phenolic compounds, etc., cannot provide a sufficient shrinkproofing effect.

The free NCO content of the prepolymer prior to said hydrogen sulfite blocking is not so critical but is preferably 0.45-1.8 weight %. In the case of NCO contents less than 0.45 weight %, the production of the urethane prepolymer tends to be difficult. On the other hand, if the upper limit of 1.8 weight % is exceeded, the hand of the finished fiber tends to be somewhat unsatisfactory, although the shrinkproofing effect is not much adversely affected. The polyether polyol and organic polyisocyanate are reacted in a suitable ratio. The molar NCO/active hydrogen ratio can be freely selected to be over 1.0 by the known method. The reaction is conducted at a temperature of 30-130°C for 30 minutes to 50 hours. In this manner, a urethane prepolymer containing free isocyanate groups in a proportion of 0.45-1.8 weight % can be obtained (Claim 4).

The synthesis of the urethane prepolymer can be carried out in the absence of a solvent but depending on the desired viscosity of the urethane prepolymer, a solvent inert to the isocyanate and capable of dissolving the urethane prepolymer can be employed. Such solvent includes dioxane, methyl ethyl ketone, N,N'-dimethylformamide, tetrahydrofuran, N-methyl-2-pyrrolidone, toluene, and propylene glycol monomethyl ether actate, to mention just a few.

The urethane compound thus synthesized is a stable, water-soluble, thermoreactive urethane textile finishing agent.

The technology for depositing the finishing agent of this invention on a substrate textile fiber or article includes dipping in an aqueous solution of the finishing agent, spraying with the solution, and coating with the solution. The treatment that can be used for resination (polyurethane resin formation) of the finishing agent after deposition includes the dry-cure method and the steam-cure method. The treating temperature and time are not so critical but may for example be 100-160°C and 1-5 minutes, respectively.

The aforementioned conditions for the starting polyol for this urethane prepolymer in accordance with the invention have the following meanings.
(1) For the purpose of reducing the resilience of the resin formed, the present invention employs a polyether polyol having a higher molecular weight than that disclosed in the above-mentioned CSIRO patent. The keratin fiber thus treated has a soft hand, retaining the inherent feeling of the substrate keratin fiber.
(2) Critical control over the average number of functional groups in the starting polyol as herein defined provides for a shrinkproofing effect equivalent to that afforded by the conventional BAP treatment.

However, the use of a polyether polyol of high molecular weight (particularly in excess of 5,000) was found to have the following problems.

The ordinary polyether polyol is synthesized using an alkali metal. Under this condition, the reaction gives rise to a byproduct unsaturated monoether due to isomerization of propylene oxide during the reaction so that the monofunctional unsaturated.monoether and the bifunctional polyether as its dimer occur as impurities. Therefore, the higher the average molecular weight is, the lower is the functionality of the polyether polyol. For imparting sufficient shrink-proofness to the substrate fiber, the resination of the finishing agent is essential. Therefore, such a high molecular weight polyether polyol cannot be used in the present invention.

Recently, however, a catalyst not causing the by-production of the unsaturated monoether has recently been developed and, therefore, high molecular weight polyether polyols free of the above-mentioned drawback are available today (e.g. Japanese Kokai Tokkyo Koho H2-265921).

In addition, it has become possible to control the average number of functional groups by quantitative ¹³C NMR spectrometry so as to insure steady expression of shrinking resistance [J. Appl. Polym. Sci., 52, 1015-1022, 1994).

In accordance with the present invention, keratin fiber can be shrinkproofed dependably and successfully. Moreover, the inherent hand of keratin fiber which has been adversely affected by the prior art BAP treatment can now be fully retained.

### EXAMPLES

### Example of Synthesis-1

To 400 parts of glycerol propylene oxide addition polymer (¹³C NMR average functionality 2.4, average molecular weight 8,000, PO content 100%) was added 25 parts of hexamethylene diisocyanate and the reaction was carried out at 100°C for 2 hours. The resulting urethane prepolymer had a free NCO content of 1.5%. Then, 55 parts of 30% aqueous solution of sodium hydrogen sulfite was added and the mixture was stirred at 45°C for 60 minutes. This reaction mixture was diluted with 2,350 parts of water to provide a translucent, viscous anionic blocked urethane prepolymer aqueous solution with a resin content of 15%.

### Example of Synthesis-2

To 450 parts of glycerol propylene oxide addition polymer (quantitative ¹³C NMR average functionality 2.5, average molecular weight 10,000, PO content 100%) was added 22.3 parts of hexamethylene diisocyanate and the reaction was carried out at 100°C for 2 hours. The resulting urethane prepolymer had a free NCO content of 1.2%. Then, 47 parts of 30% aqueous solution of sodium hydrogen sulfite was added and the mixture was stirred at 45°C for 60 minutes. This reaction mixture was diluted with 2,630 parts of water to provide a translucent viscous anionic blocked urethane prepolymer aqueous solution with a resin content of 15%.

### Example of Synthesis-3

To 500 parts of glycerol propylene oxide addition polymer (quantitative ¹³C NMR average functionality 2.2, average molecular weight 20,000, PO content 100%) was added 6.3 parts of hexamethylene diisocyanate and the reaction was carried out at 100°C for 2 hours. The resulting urethane prepolymer had a free NCO content of 0.65%. Then, 40 parts of 30% aqueous solution of sodium hydrogen sulfite was added and the mixture was stirred at 45°C for 60 minutes. This reaction mixture was diluted with 2,830 parts of water to provide a translucent viscous anionic blocked urethane prepolymer aqueous solution with a resin content of 15%.

### Example of Synthesis-4

To 400 parts of glycerol propylene oxide/ethylene oxide addition polymer (quantitative ¹³C NMR average functionality 2.8, average molecular weight 10,000, PO content 60%) was added 20.2 parts of hexamethylene diisocyanate and the reaction was carried out at 100°C for 2 hours. The resulting urethane prepolymer had a free NCO content of 1.2%. Then, 42 parts of 30% aqueous solution of sodium hydrogen sulfite was added and the mixture was stirred at 45°C for 60 minutes. This reaction mixture was diluted with 2,340 parts of water to provide a translucent viscous anionic blocked urethane prepolymer aqueous solution with a resin content of 15%.

### Example of Synthesis-5

To 400 parts of glycerol propylene oxide addition polymer (quantitative ¹³C NMR average functionality 2.4, average molecular weight 8,000, PO content 100%) was added 30 parts of hexamethylene diisocyanate and the reaction was carried out at 100°C for 2 hours. The resulting urethane prepolymer had a free NCO content of 2.0%. Then, 73 parts of 30% aqueous solution of sodium hydrogen sulfite was added and the mixture was stirred at 45°C for 60 minutes. This reaction mixture was diluted with 2,360 parts of water to provide a translucent viscous anionic blocked urethane prepolymer aqueous solution with a resin content of 15%.

### Example of Synthesis-6

To 400 parts of trimethylolpropane propylene oxide addition polymer (quantitative ¹³C NMR average functionality 2.4, average molecular weight 8,000, PO content 100%) was added 30 parts of hexamethylene diisocyanate and the reaction was carried out at 100°C for 2 hours. The resulting urethane prepolymer had a free NCO content of 1.5%. Then, 41 parts of 30% aqueous solution of sodium hydrogen sulfite was added and the mixture was stirred at 45°C for 60 minutes. This reaction mixture was diluted with 1,770 parts of water to provide a translucent viscous anionic blocked urethane prepolymer aqueous solution with a resin content of 15%.

### Comparative Example of Synthesis-1

To 100 parts of glycerol propylene oxide addition polymer (quantitative ¹³C NMR average functionality 2.7, average molecular weight 3,000, PO content 100%) was added 16.8 parts of hexamethylene diisocyanate and the reaction was carried out at 100°C for 2 hours. The resulting urethane prepolymer had a free NCO content of 3.6%. Then, 40.5 parts of 30% aqueous solution of sodium hydrogen sulfite was added and the mixture was stirred at 45°C for 60 minutes. This reaction mixture was diluted with 427 parts of water to provide a translucent viscous anionic blocked urethane prepolymer aqueous solution with a resin content of 20%.

### Comparative Example of Synthesis-2

To 320 parts of glycerol propylene oxide addition polymer (quantitative ¹³C NMR average functionality 2.2, average molecular weight 5,000, PO content 100%) was added 32 parts of hexamethylene diisocyanate and the reaction was carried out at 100°C for 2 hours. The resulting urethane prepolymer had a free NCO content of 2.3%. Then, 67 parts of 30% aqueous solution of sodium hydrogen sulfite was added and the mixture was stirred at 45°C for 60 minutes. This reaction mixture was diluted with 1,340 parts of water to provide a translucent viscous anionic blocked urethane prepolymer aqueous solution with a resin content of 20%.

### Comparative Example of Synthesis-3

To 300 parts of glycerol propylene oxide addition polymer (quantitative ¹³C NMR average functionality 2.8, average molecular weight 5,000, PO content 100%) was added 30 parts of hexamethylene diisocyanate and the reaction was carried out at 100°C for 2 hours. The resulting urethane prepolymer had a free NCO content of 2.3%. Then, 65 parts of 30% aqueous solution of sodium hydrogen sulfite was added and the mixture was stirred at 45°C for 60 minutes. This reaction mixture was diluted with 1,255 parts of water to provide a translucent viscous anionic blocked urethane prepolymer aqueous solution with a resin content of 20%.

### Comparative Example of Synthesis-4

To 500 parts of glycerol propylene oxide addition polymer (quantitative ¹³C NMR average functionality 1.7, average molecular weight 8,000, PO content 100%) was added 25 parts of hexamethylene diisocyanate and the reaction was carried out at 100°C for 2 hours. The resulting urethane prepolymer had a free NCO content of 1.5%. Then, 55 parts of 30% aqueous solution of sodium hydrogen sulfite was added and the mixture was stirred at 45°C for 60 minutes. This reaction mixture was diluted with 2,350 parts of water to provide a translucent viscous anionic blocked urethane prepolymer aqueous solution with a resin content of 15%.

### Comparative Example of Synthesis-5

To 400 parts of glycerol propylene oxide/ethylene oxide addition polymer (quantitative ¹³C NMR average functionality 2.8, average molecular weight 10,000, PO content 35%) was added 20.2 parts of hexamethylene diisocyanate and the reaction was carried out at 100°C for 2 hours. The resulting urethane prepolymer had a free NCO content of 1.2%. Then, 40 parts of 30% aqueous solution of sodium hydrogen sulfite was added and the mixture was stirred at 45°C for 60 minutes. This reaction mixture was diluted with 2,340 parts of water to provide a translucent viscous anionic blocked urethane prepolymer aqueous solution with a resin content of 15%.

### Comparative Example of Synthesis-6

To 450 parts of ethylene glycol propylene oxide addition polymer (quantitative ¹³C NMR average functionality 1.4, average molecular weight 8,000, PO content 100%) was added 38 parts of hexamethylene diisocyanate and the reaction was carried out at 100°C for 2 hours. The resulting urethane prepolymer had a free NCO content of 1.0%. Then, 39 parts of 30% aqueous solution of sodium hydrogen sulfite was added and the mixture was stirred at 45°C for 60 minutes. This reaction mixture was diluted with 2,473 parts of water to provide a translucent viscous anionic blocked urethane prepolymer aqueous solution with a resin content of 15%.

### Comparative Example of Synthesis-7

To 500 parts of glycerol propylene oxide/ethylene oxide addition polymer (quantitative ¹³C NMR average functionality 2.9, average molecular weight 8,000, PO:EO=50:50 (weight %)) was added 32 parts of hexamethylene diisocyanate and the reaction was carried out at 100°C for 2 hours. The resulting urethane prepolymer had a free NCO content of 1.5%. Then, 19 parts of butanoxime was added and the mixture was stirred for 60 minutes. This reaction mixture was diluted with 2,110 parts of water to provide a translucent viscous nonionic blocked urethane prepolymer aqueous solution with a resin content of 20%.

### Examples 1-6 and Comparative Examples 1-7

Resin treating compositions were prepared by blending 6 parts of 5% aqueous solution of sodium hydrogen carbonate with the equivalent of 5% nonvolatile matter of each of the thermoreactive urethane treating agents obtained in the above Examples of Synthesis 1-6 and Comparative Examples of Synthesis 1-7. Then, textile fabrics of 100% wool were dipped in those resin treating compositions, respectively, and drained by squeezing. Then, the fabrics were again dipped in the same compositions and squeezed (squeeze rate 70%). Thereafter, the respective fabrics were dried in a hot air current at 120°C for 3 minutes and further heat-treated at 130°C for 2 minutes.

The treated fabrics were then evaluated for shrinkproofness (expressed in the reduction in area on laundering with a home laundering machine) and handle (as evaluated instrumentally (using No. 226 Handle-O-Meter, Yasuda Precision Machinery Co.) and organoleptically by a panel test) and the results were compared. The results are shown in Tables 1 and 2.

**Table 1**

| | Blank | Example | | | | | |
|---|---|---|---|---|---|---|---|
| | | 1 | 2 | 3 | 4 | 5 | 6 |
| Average molecular weight | - | 8000 | 10000 | 20000 | 10000 | 8000 | 8000 |
| Average functionality | - | 2.4 | 2.5 | 2.2 | 2.8 | 2.4 | 2.4 |
| PO content (%) | - | 100 | 100 | 100 | 60 | 100 | 100 |
| Free NCO (%) | - | 1.5 | 1.2 | 0.65 | 1.2 | 2.0 | 1.5 |
| Starting polyol | - | Gly | Gly | Gly | Gly | Gly | TMP |
| Blocking agent | - | HS | HS | HS | HS | HS | HS |
| Shrinkproofness | 67 | 1 | 1.5 3 | 3 | 2 | 1 | 1 |
| Hand (g) | 30 | 38 | 31 | 30 | 33 | 38 | 37 |
| Panel evaluation (score) | 5 | 4.1 | 5.0 | 5.0 | 4.8 | 3.9 | 4.2 |

**Table 2**

| | Comparative Example | | | | | | |
|---|---|---|---|---|---|---|---|
| | 1 | 2 | 3 | 4 | 5 | 6 | 7 |
| Average molecular weight | 3000 | 5000 | 5000 | 8000 | 10000 | 8000 | 8000 |
| Average functionality | 2.7 | 2.2 | 2.8 | 1.7 | 2.8 | 1.4 | 2.9 |
| PO content (%) | 100 | 100 | 100 | 100 | 35 | 100 | 50 |
| Free NCO (%) | 3.6 | 2.3 | 2.3 | 1.5 | 1.2 | 1.0 | 1.5 |
| Starting polyol | Gly | Gly | Gly | Gly | Gly | EG | Gly |
| Blocking agent | HS | HS | HS | HS | HS | HS | BO |
| Shrinkproofness | 2 | 17 | 1 | 64 | 10 | 53 | 67 |
| Hand (g) | 55 | 40 | 45 | 35 | 33 | 30 | 38 |
| Panel evaluation (score) | 3 | 3.5 | 3.3 | 4.5 | 4.5 | 5.0 | 4.3 |
| Starting polyol: Gly = glycerol, TMP = trimethylolpropane, EG = ethylene glycol | | | | | | | |
| Blocking agent: HS = hydrogen sulfite, BO: butanoxime | | | | | | | |
| Shrinkproofness: determined in the central 20 cm x 20 cm area of a 30 cm x 30 cm fabric Laundering conditions: JIS L0217 103 Method (20 cycles) Method for evaluation: reduction in area | | | | | | | |
| Hand: Instrument: No. 226 Handle-O-Meter (Yasuda Precision Machinery Co.) Sample: 20 cm x 20 cm Method for measurement: the average of the results of 2 lengthwise measurements and 2 crosswise measurements | | | | | | | |
| Organolepic evaluation of the hand | | | | | | | |
| The fabric (Viyella weave of 100% wool) treated with the composition obtained in Comparative Example of Synthesis-1 was used as reference control. The treated fabrics were evaluated by 12 panelists according to the following scoring criteria and the mean values were calculated. | | | | | | | |
| Score | | | | | | | |
| 5: Remarkably softer than reference control | | | | | | | |
| 4: Slightly softer than reference control | | | | | | | |
| 3: As soft as reference control | | | | | | | |
| 2: Slightly harder than reference control | | | | | | | |
| 1: Remarkably harder than reference control | | | | | | | |

As can be seen from the above results, the finishing agent of the present invention provides not only for a shrinkproofing effect comparable to the effect of the prior art BAP treatment but also for as soft a hand as that of the substrate fabric, the latter effect having never been accomplished by the prior art BAP treatment. The term "hand" mentioned here means particularly "flexural hand" as the term is used in Fiber Characteristics Evaluation Research Committee(ed): Handbook of Fiber Metrics (Sen-i Keisoku Binran), p. 185-199, the Textile Machinery Society of Japan (1975).

## Claims

1. A keratin textile fiber finishing agent comprising a urethane prepolymer satisfying the following conditions :
(a) The reaction product of a polyol derived from a trihydric alcohol with an isocyanate compound,
(b) The average functionality of the polyol in (a) as determined by quantitative ¹³C NMR spectrometry is 2.2-3-0,
(c) The average molecular weight of the polyol in (a) is 8,000-20,000,
(d) The polyoxypropylene content of the polyol in (a) is 50-100%,
(e) The terminal isocyanate groups have been blocked with a hydrogen sulfite.

2. The finishing agent according to Claim 1 wherein the average functionality (b) is 2.4-3.0.

3. The finishing agent according to Claim 1 or 2 wherein the average molecular weight (c) is 10,000-20,000.

4. The finishing agent according to any of Claims 1-3 wherein the free isocyanate content prior to blocking with said hydrogen sulfite is 0.45-1.8 weight %.

5. A method of treating a keratin textile fiber which comprises depositing the finishing agent claimed in any of Claims 1-4 on the keratin fiber and heat-treating the treated fiber.

## Patentansprüche

1. Behandlungsmittel für Keratin-Textilfasern, das ein Urethan-Prepolymer enthält, welches folgende Bedingungen erfüllt:
(a) Es ist das Reaktionsprodukt eines von einem dreiwertigen Alkohol abgeleiteten Polyols mit einer Isocyanatverbindung,
(b) die durchschnittliche Funktionalität des Polyols (a), bestimmt durch quantitative ¹³C NMR-Spektrometrie, beträgt 2,2-3,0,
(c) das durchschnittliche Molekulargewicht des. Polyols (a) ist 8000-20 000,
(d) der Polyoxypropylengehalt des Polyols in (a) ist 50-100
(e) die endständigen Isocyanatgruppen wurden mit einem Hydrogensulfit verkappt.

2. Behandlungsmittel nach Anspruch 1, wobei die durchschnittliche Funktionalität (b) 2, 4-3, 0 ist.

3. Behandlungsmittel nach Anspruch 1 oder 2, wobei das durchschnittliche Molekulargewicht (c) 10 000 bis 20 000 ist.

4. Behandlungsmittel nach einem der Ansprüche 1 bis 3, wobei der Gehalt an freiem Isocyanat vor dem Verkappen mit dem Hydrogensulfit 0,45 bis 1,8 Gew.-%: beträgt.

5. Verfahren zur Behandlung einer Keratin-Textilfaser, welches das Abscheiden des in einem der Ansprüche 1 bis 4 beanspruchten Behandlungsmittels auf der Keratinfaser und Wärmebehandeln der zu behandelnden Faser umfaßt.

## Revendications

1. Agent d'apprêt pour fibres textiles kératiniques comprenant un prépolymère d'uréthane satisfaisant aux conditions suivantes :
(a) le produit de réaction d'un polyol dérivé d'un triol avec un composé isocyanate,
(b) le nombre moyen de groupes fonctionnels du polyol dans (a), tel que déterminé par spectrométrie quantitative de RMN de ¹³C est de 2,2 à 3,0,
(c) la masse moléculaire moyenne du polyol dans (a) est de 8000 à 20 000,
(d) la teneur en polyoxypropylène du polyol dans (a) est de 50 à 100 %,
(e) les groupes terminaux isocyanate ont été bloqués avec un sulfite d'hydrogène.

2. Agent d'apprêt selon la revendication 1, dans lequel le nombre moyen de groupes fonctionnels (b) est de 2,4 à 3,0.

3. Agent d'apprêt selon la revendication 1 ou 2, dans lequel la masse moléculaire moyenne (c) est de 10 000 à 20 000.

4. Agent d'apprêt selon l'une quelconque des revendications 1 à 3, dans lequel la teneur en isocyanate libre avant le blocage avec ledit sulfite d'hydrogène est de 0,45 à 1,8 % en poids.

5. Procédé de traitement d'une fibre textile kératinique qui comprend le fait de déposer l'agent d'apprêt selon l'une quelconque des revendications 1 à 4 sur la fibre kératinique et de traiter thermiquement la fibre traitée.
